# FASCICULE DE BREVET EUROPEEN

(11) **EP 0 962 618 B1**
(45) Date de publication et mention de la délivrance du brevet: **08.01.2003**
(21) Numéro de dépôt: 99401283.9
(22) Date de dépôt: 28.05.1999
(51) Int. Cl.: E05F 11/48, F16C 1/18

(54) **Dispositif de lève-vitre de véhicule automobile à tambour d'enroulement de deux câbles**
Kraftfahrzeug-Fensterheber mit Wickeltrommel für zwei Kabel
Vehicle window raiser with winding drum for two cables

(30) Priorité: 28.05.1998 FR 9806756; 09.07.1998 FR 9808842
(43) Date de publication de la demande: 08.12.1999
(73) Titulaire: ArvinMeritor Light Vehicle Systems-France, 45600 Sully sur Loire (FR)
(72) Inventeur: Chu, Yi-Hwa, 45570 Ouzouer sur Loire (FR)
(74) Mandataire: Jacobson, Claude

(56) Documents cités:
- EP-A- 0 164 693
- GB-A- 1 197 879
- GB-A- 2 199 889

## Description

La présente invention a pour objet un dispositif de lève-vitre de porte de véhicule automobile, du type comprenant un tambour d'enroulement de deux câbles, un capot de maintien de ce tambour enveloppant partiellement celui-ci en laissant accessible une partie de sa circonférence, une platine de fixation du capot et de support du tambour et une « boite à frein » (voir document GB-A-2 199 889).

Cette dernière est pourvue d'un axe-manivelle d'entraînement du tambour en rotation, et de moyens (ressort interne) pour assurer une irréversibilité de la rotation du tambour. Cette irréversibilité empêche de faire descendre une vitre entrouverte par pression sur le bord supérieur de la vitre.

Le capot est en outre profilé de manière à former à sa base contiguë à la platine un tunnel délimitant avec le tambour un passage périphérique permettant une introduction manuelle d'un grain d'accrochage d'un câble sur sensiblement un tour autour du tambour.

Dans une réalisation connue, le tambour présente une fenêtre adaptée pour servir de logement au grain terminal du câble lorsque celui-ci a été glissé dans le tunnel périphérique. Celui-ci s'étend pratiquement sur sensiblement une demi circonférence autour du tambour, correspondant à l'étendue angulaire du capot. Il est dimensionné en largeur et en hauteur de manière à permettre l'introduction entre la paroi de ce tunnel et le tambour, du grain d'accrochage du câble. Grâce à la rigidité et à l'élasticité de ce dernier, son grain peut être introduit par poussée sur le câble autour du tambour en étant guidé par la paroi du tunnel et en glissant sur une piste support en tôle faisant partie de la platine, et ce jusqu'à la fenêtre d'accrochage associée, dans laquelle l'opérateur introduit manuellement le grain afin d'accrocher le câble.

Afin de rendre la « boite de frein » plus compacte et plus performante, on est amené à accroître sensiblement son diamètre. De ce fait, il n'est plus possible de disposer de la piste annulaire en tôle de la platine, entourant la base du tambour et qui doit être supprimée.

L'invention a pour but de résoudre ce problème en proposant une solution appropriée.

Conformément à l'invention, la base du tambour est prolongée par une collerette monopièce avec le tambour et dont la largeur est sensiblement égale à celle du tunnel, cette collerette servant de support de glissement au grain du câble.

La collerette est en outre réalisée monobloc avec des pattes d'entraînement du tambour, interposées entre des pattes correspondantes d'entraînement de l'axe-manivelle.

D'autres particularités et avantages de l'invention apparaîtront au cours de la description qui va suivre, faite en référence aux dessins annexés qui en illustrent une forme de réalisation à titre d'exemple non limitatifs.

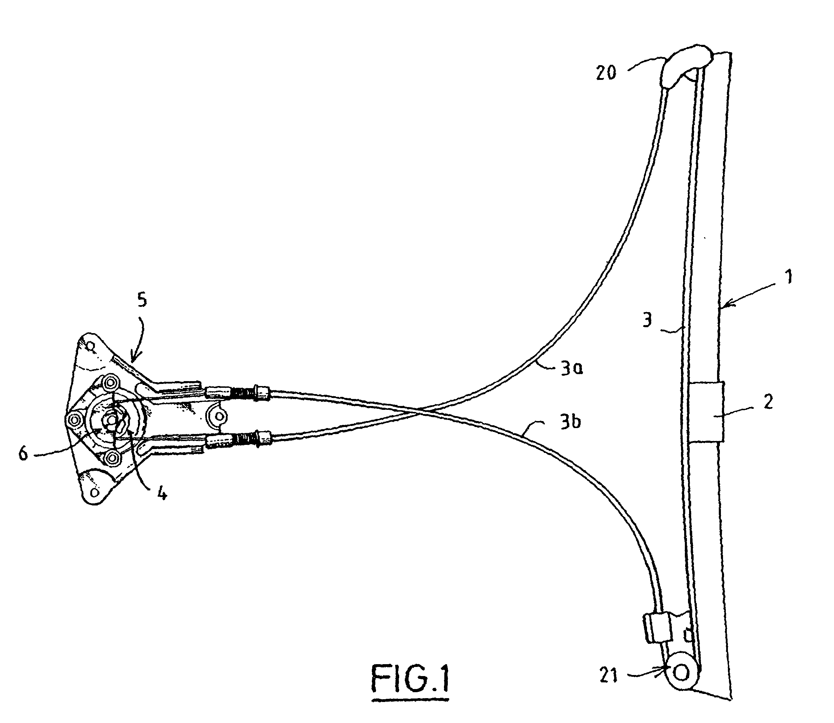

La figure 1 est une vue en perspective d'un lève-vitre de véhicule automobile incorporant un dispositif de tambour selon l'invention.

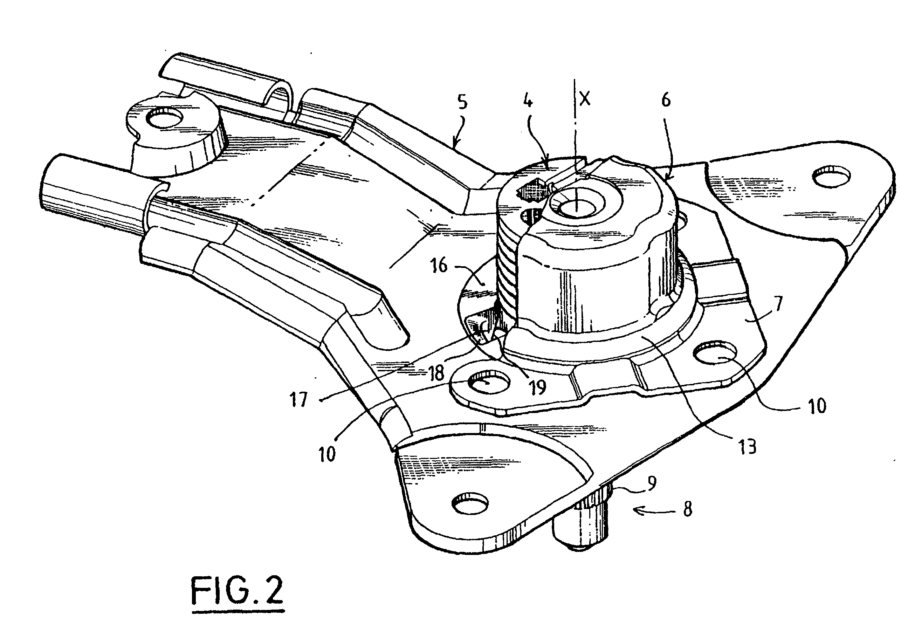

La figure 2 est une vue en perspective à échelle agrandie du dispositif de tambour de lève-vitre de la figure 1.

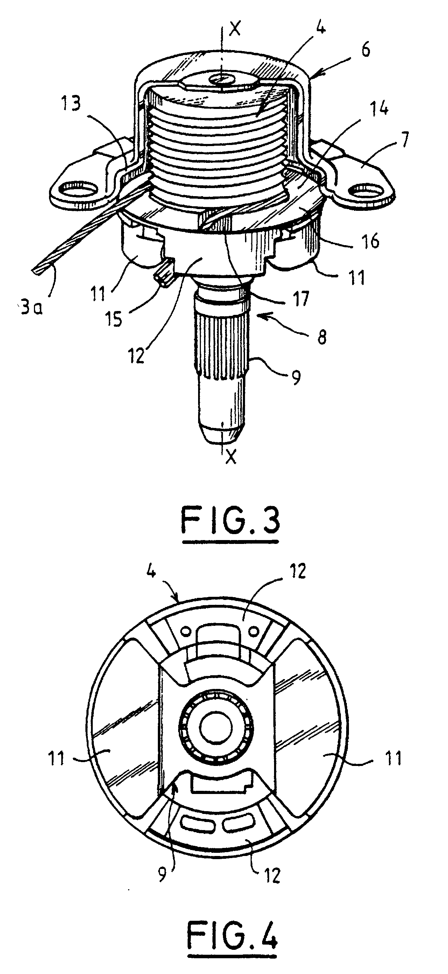

La figure 3 est une vue en perspective partielle sous un angle différent, du dispositif de la figure 2.

La figure 4 est une vue de dessous du dispositif de la figure 3.

La figure 5A est une vue en élévation du tambour des figures 2 à 4.

La figure 5B est une vue similaire à la figure 5A montrant un tambour selon l'art antérieur .

La figure 6 est une vue en coupe axiale suivant 6-6 du tambour de la figure 5A.

La figure 7 est une vue en perspective de dessous du tambour des figures 5A et 6.

Le lève-vitre illustré aux dessins comprend un rail 1 de guidage d'un curseur 2 supportant une vitre non représentée, et fixé à un câble 3 passant sur des organes de renvoi 20, 21 montés aux extrémités du rail 1. Au delà de ces organes de renvoi 4, 5, le câble 3 se divise en un câble supérieur 3a et un câble inférieur 3b qui viennent s'enrouler dans les gorges d'un tambour 4 disposé sur une platine 5 de support et qui peut tourner autour d'un axe de rotation XX.

Le dispositif comprend un capot 6 de maintien du tambour 4 enveloppant partiellement celui-ci, en laissant accessible une partie de sa circonférence, le capot 6 étant fixé par son socle 7 à la platine 5, par des éléments de fixation engagés dans des trous 10 du socle 7 et de la platine 5 Le dispositif est complété par une « boite de frein » 8 connue en soi, pourvue d'un axe-manivelle 9 coaxial au tambour 4, disposé sous la platine 5 qui présente une ouverture de passage de l'axe-manivelle 9. Ce dernier est équipé de doigts 11 interposés entre des doigts complémentaires 12 solidaires du tambour 4 avec lesquels coopèrent les doigts 11. Le tambour 4 est réalisé en matière plastique, alors que le capot 6 et la platine 5 sont en tôle métallique.

La « boite de frein » 8 contient un mécanisme à ressort non représenté, connu en soi, et qui assure l'irréversibilité de la rotation du tambour 4, empêchant ainsi d'abaisser une vitre entrouverte autrement que par manoeuvre du lève-vitre.

Le capot 6 est profilé de manière à présenter à sa base contiguë à la platine 5, un tunnel 13 délimitant avec le tambour 4 un passage périphérique 14 permettant une introduction manuelle d'un grain 15 d'accrochage d'un câble 3a (ou 3b) sur à peu près un tour autour du tambour 4. A cet effet, la base du tambour 4 est prolongée par une collerette 16 monopièce avec le tambour, et dont la largeur est sensiblement égale à celle du tunnel 13.

La collerette 16 est continue tout autour de la base du tambour 4, à l'exception d'une ouverture 17 d'entrée du grain 15 de câble. Ainsi la collerette 16 constitue pour le grain 15 une piste de support et de glissement tout autour du tambour 4, après introduction dans le passage périphérique 14 et enroulement autour du tambour 4 jusqu'à ce que le grain 15 vienne se placer dans son logement 17. Grâce à cette continuité de la collerette 16, le grain 14 ne risque pas de venir en butée dans les intervalles constituant des interruptions entre les doigts d'entraînement 11 de l'axe manivelle 9 et 12 du tambour 4.

L'ouverture 17 dans la collerette 16 est délimitée par une rampe latérale 18 extérieure, inclinée sur l'axe de rotation XX du tambour 4, cette rampe 18 étant agencée entre deux parois 19 à peu près parallèles à l'axe du tambour 4 et formées dans un doigt 12, sous la jupe ou collerette 16. La rampe latérale peut avoir une inclinaison variable sur l'axe XX, par exemple 45°.

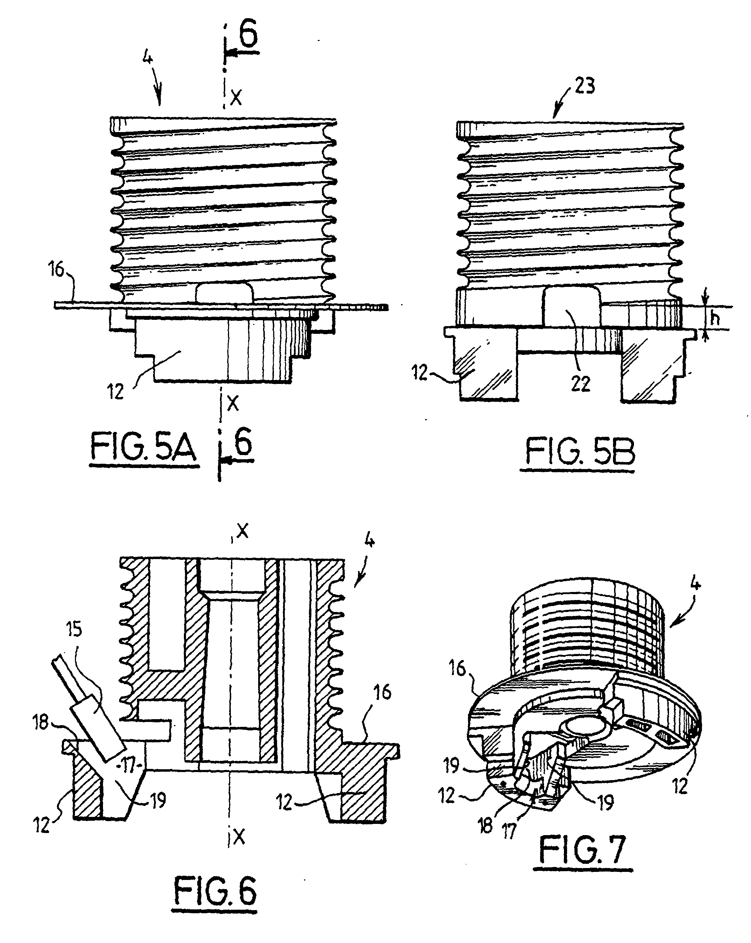

Dans l'agencement antérieur du tambour utilisé jusqu'à présent, illustré à la figure 5B, l'accès du grain 15 du câble 3a (ou 3b) est assuré par insertion radiale dans une fenêtre 22 pratiquée à la base du tambour 23. Cette fenêtre 22 est à peu près parallèle à l'axe longitudinal XX du tambour 23 et s'étend sur une hauteur de tambour h augmentée de la largeur de la première gorge d'insertion du câble.

Par rapport à cette réalisation antérieure, on voit que l'avantage du tambour 4 des figures 5A, 6 et 7 réside dans le fait de remplacer l'insertion radiale du grain dans la fenêtre 22 par une insertion inclinée sur l'axe XX dans l'ouverture 17 ménagée dans une collerette 16, et dans un doigt 12, n'existant pas dans le tambour antérieur 23. Un tel agencement permet donc pour le même nombre de gorges, de diminuer la hauteur totale du tambour de la hauteur h, l'insertion du grain 15 se faisant comme représenté aux figures 6 et 7 par glissement sur la rampe 18 puis accrochage du grain derrière l'une ou l'autre des deux parois 19 (figure 7). Ainsi est accrue sensiblement la compacité du tambour et de l'ensemble du dispositif.

Bien entendu l'inclinaison de la rampe 18 peut varier plus ou moins de part et d'autre de la valeur de 45°, donnée à titre d'exemple indicatif.

## Revendications

1. Dispositif de lève-vitre de véhicule automobile comprenant un tambour (4) d'enroulement de deux câbles (3a, 3b), un capot (6) de maintien de ce tambour enveloppant partiellement celui-ci en laissant accessible une partie de sa circonférence, une platine (5) de fixation du capot et de support de tambour, et une boite de frein (8) pourvue d'un axe-manivelle d'entraînement du tambour et de moyens pour assurer une irréversibilité de la rotation du tambour, le capot étant en outre profilé de manière à former à sa base contiguë à la platine un tunnel (13) délimitant avec le tambour un passage périphérique (14) permettant une introduction manuelle d'un grain (15) d'accrochage d'un câble (3a ou 3b) sur sensiblement un tour autour du tambour, **caractérisé en ce que** la base du tambour est prolongée par une collerette (16) monopièce avec le tambour et dont la largeur est sensiblement égale à celle du tunnel, cette collerette servant de support de glissement au grain du câble.

2. Dispositif de lève-vitre selon la revendication 1, **caractérisé en ce que** la collerette (16) du tambour (4) est continue, à l'exception d'une ouverture (17) d'entrée du grain (15) du câble (3a ou 3b).

3. Dispositif selon la revendication 2, **caractérisé en ce que** l'ouverture (17) dans la collerette (16) est délimitée par une rampe latérale extérieure (18), inclinée sur l'axe de rotation (XX) du tambour (4), cette rampe étant agencée entre des parois (19) à peu près parallèles à l'axe du tambour, formées sous la collerette (16) dans un doigt (12) adapté pour coopérer avec des doigts complémentaires (11) d'un axe-manivelle (9) coaxial au tambour.

4. Dispositif selon la revendication 3, **caractérisé en ce que** la rampe latérale (18) est inclinée d'environ 45 degrés sur l'axe (XX) du tambour (4).

## Patentansprüche

1. Fensterhebevorrichtung für ein Kraftfahrzeug, umfassend eine Trommel (4) zum Aufwickeln zweier Kabel (3a, 3b), eine Haltekappe (6) für diese Trommel, die diese teilweise umgibt, wobei sie einen Teil ihres Umfanges zugänglich lässt, eine Platte (5) zur Befestigung der Haltekappe und Aufnahme der Trommel und ein Bremsgehäuse (8), das eine Kurbelachse für den Antrieb der Trommel und Mittel aufweist, um eine Irreversibilität der Drehung der Trommel zu gewährleisten, wobei diese Haltekappe ferner derart profiliert ist, dass sie durch ihre an die Platte anliegende Basis einen Tunnel (13) bildet, der mit der Trommel einen Umfangsgang (14) begrenzt, der eine manuelle Einführung eines Haltestücks (15) zur Befestigung eines Kabels (3a oder 3b) im wesentlichen einmal um die Trommel herum ermöglicht,
**dadurch gekennzeichnet, dass**
die Basis der Trommel durch einen Kragen (16) verlängert ist, der mit der Trommel einstückig ist und dessen Breite im wesentlichen gleich jener des Tunnels ist, wobei dieser Kragen als Gleitträger für das Haltestück des Kabels dient.

2. Fensterhebevorrichtung nach Anspruch 1, **dadurch gekennzeichnet, dass** der Kragen (16) der Trommel (4) durchgehend ist, mit Ausnahme einer Eintrittsöffnung (17) für das Haltestück (15) des Kabels (3a oder 3b).

3. Vorrichtung nach Anspruch 2, **dadurch gekennzeichnet, dass** die Öffnung (17) in dem Kragen (16) durch eine äußere seitliche Rampe (18) begrenzt ist, die zur Drehachse (XX) der Trommel (4) geneigt ist, wobei diese Rampe zwischen zur Achse der Trommel nahezu parallelen Wänden (19) angeordnet ist, die unter dem Kragen (16) in einem Zapfen (12) ausgebildet sind, der derart ausgeführt ist, dass er mit komplementären Zapfen (11) einer zur Trommel koaxialen Kurbelachse (9) zusammenwirkt.

4. Einrichtung nach Anspruch 3, **dadurch gekennzeichnet, dass** die seitliche Rampe (18) um ungefähr 45 Grad zur Achse (XX) der Trommel (4) geneigt ist.

## Claims

1. Window winding device for a motor vehicle, comprising a winding drum (4) for two cables (3a, 3b), a retaining cover (6) for this drum which partially encloses the drum, leaving access to part of its circumference, a plate (5) for securing the cover and supporting the drum, and a brake box (8) provided with a crankshaft for driving the drum, and means for preventing the rotation of the drum from being reversed, the cover further being profiled so as to form, at its base contiguous to the plate, a tunnel (13) which delimits with the drum a peripheral passage (14) allowing manual insertion of an attachment bead (15) for a cable (3a or 3b) over substantially one turn around the drum, **characterised in that** the base of the drum is extended by a flange (16) integral with the drum, the width of which is substantially equal to that of the tunnel, this flange acting as a sliding support for the bead of the cable.

2. Window winding device according to claim 1, **characterised in that** the flange (16) of the drum (4) is continuous, apart from an inlet opening (17) for the bead (15) of the cable (3a or 3b).

3. Device according to claim 2, **characterised in that** the opening (17) in the flange (16) is delimited by an external lateral ramp (18) inclined relative to the rotation axis (XX) of the drum (4), this ramp being formed between walls (19) substantially parallel to the axis of the drum and formed under the flange (16) in a dog (12) adapted to cooperate with complementary dogs (11) of a crankshaft (9) coaxial with the drum.

4. Device according to claim 3, **characterised in that** the lateral ramp (18) is inclined at an angle of about 45° relative to the axis (XX) of the drum (4).
